# EUROPEAN PATENT APPLICATION

(11) **EP 2 335 989 A1**
(43) Date of publication of application: **22.06.2011**
(21) Application number: 10191865.4
(22) Date of filing: 19.11.2010
(51) Int. Cl.: B60W 20/00, B60W 30/18, B60W 10/26, B60W 10/08

(54) **Driving support device, method, and program**

(30) Priority: 16.12.2009 JP 2009284818
(71) Applicant: AISIN AW CO., LTD., Anjo-shi, Aichi 444-1192 (JP)
(72) Inventor: Niwa, Toshiaki, Anjo-shi, Aichi 444-1192 (JP); Ono, Yoshinori, Anjo-shi, Aichi 444-1192 (JP)
(74) Representative: Kramer - Barske - Schmidtchen

(57) **Abstract**

A driving support device comprises a target determination unit (20) adapted to determine a target position ahead of a vehicle, a target vehicle speed at the target position, and an intermediate target vehicle speed (Vt) that is higher than the target vehicle speed, a target charging electric power setting unit (20) adapted to set first target charging electric power charging a battery (45) to generate a regeneration brake that reduces a vehicle speed at a deceleration start position to start deceleration of the vehicle to the intermediate target vehicle speed, and set second target charging electric power charging the battery (45) to generate the regeneration brake that reduces the intermediate target vehicle speed to the target vehicle speed, and a deceleration control unit (20) adapted to control an electric generator (44) installed in the vehicle to charge the battery with the first target charging electric power and to generate the regeneration brake, and, after the vehicle speed of the vehicle has become the intermediate target vehicle speed, control the electric generator to charge the battery with the second target charging electric power and to generate the regeneration brake.

## Description

The present invention relates to a driving support device, a method, and a program that provide support for charging a battery with high charging efficiency while keeping a comfortable ride from worsening.

Conventionally, a technology that decelerates a vehicle by regeneration brake and collects braking energy in the battery is known. For example, JP-A-2007-221889 discloses that a battery acceptable power Win (corresponding to charging electric power) is given by braking force Fbr x velocity V ( x efficiency). In addition, in order to charge the battery with maximum electric power while preventing heat generation and worsening of performance of the battery, it is generally known that making the charging electric power constant is effective.

According to the conventional technology, in decelerating the vehicle by the regeneration brake, it is effective to generate the regeneration brake that charges the battery with a constant level of the charging electric power. According to this configuration, when braking by the regeneration brake is performed, braking force operated on the vehicle is in inverse proportion to a vehicle speed. Consequently, in this configuration, when the vehicle speed is reduced through the braking by the regeneration brake, the braking force operated on the vehicle drastically increases. Therefore, ride feeling gets worse as the vehicle speed decreases.
In view of the problems described above, it is an object of the present invention to provide a technology to collect energy while suppressing an excessive increase of the braking force.
This object is achieved by the driving support device according to claim 1, the driving support method according to claim 4, and the driving support program according to claim 7. Further developments are given in the dependent claims.

In the present invention, the vehicle is decelerated by generating the regeneration brake that charges the battery with first target charging electric power to reduce a vehicle speed at a deceleration start position to an intermediate target vehicle speed, and after the vehicle speed of the vehicle has become the intermediate target vehicle speed, generating the regeneration brake that charges the battery with second target charging electric power to reduce the intermediate target vehicle speed to the target vehicle speed. That is, after the deceleration start position, the regeneration brake that charges the battery with the first target charging electric power is generated. After that, the regeneration brake that charges the battery with the second target charging electric power is generated.

Regarding the regeneration brake that sets a certain target charging electric power, it is possible to consider that the charging electric power of the battery is equal to (or proportional to) a product of the braking force operated on the vehicle and the vehicle speed, as described above. Consequently, when performing braking by generating the regeneration brake that charges the battery with a single level of the target charging electric power from the deceleration start position to the target position, the braking force increases in inverse proportion to the vehicle speed. Therefore, the braking force becomes excessively large in the course of reducing the vehicle speed. Here, instead of charging the battery with a single level of charging electric power consistently from the deceleration start position to the target position, the first target charging electric power and the second target charging electric power are set, and the battery is charged with different levels of electric power in the early period and the latter period of the deceleration.

Also in the above configuration, when each of the first target charging electric power and the second target charging electric power is set, the braking force increases in inverse proportion to the vehicle speed in the respective phases in which the regeneration brake is generated by charging the battery with the respective levels of electric power. However, when it is configured to reduce the vehicle speed to the intermediate target vehicle speed by the regeneration brake that charges the battery with the first target charging electric power in the early period, and then to reduce the intermediate target vehicle speed to the target vehicle speed by the regeneration brake that charges the battery with the second target charging electric power in the latter period, it becomes possible to collect the energy while suppressing an excessive increase of the braking force, compared to the abovementioned configuration to generate the regeneration brake that charges the battery with a single level of the charging electric power.

A target determination unit is not limited provided that it can determine the target position ahead of the vehicle, the target vehicle speed at the target position, and the intermediate target vehicle speed that is higher than the target vehicle speed. That is, it is only necessary to define as the target position a position on a road where the vehicle speed should be the target vehicle speed (or less than the target vehicle speed) and determine the target position being associated with the target vehicle speed. The target position may be associated with a feature on the road such as a position of a stop line where the target vehicle speed is 0 km/h or a start position of a slow traffic section where vehicles should travel at a certain vehicle speed or less. Or, the target vehicle speed may be determined according to a signal indicated by a traffic light, and the stop line corresponding to the traffic light may be defined as the target position if the vehicle should be stopped. Various types of configurations can be applied.

The intermediate target vehicle speed is only necessary to be the vehicle speed at which the excessive increase of the braking force can be suppressed by reducing the vehicle speed at the deceleration start position to the intermediate target vehicle speed in a first section just after deceleration start. Consequently, the intermediate target vehicle speed may be previously determined. After the vehicle speed of the vehicle has become the intermediate target vehicle speed, the braking force discontinuously changes along with change in the charging electric power to the battery; therefore, the intermediate target vehicle speed may be defined with a maximum value in a range of the vehicle speed that is previously determined as the vehicle speed which does not give a driver a discomfort feeling even when the braking force has discontinuously changed. The range of the vehicle speed that does not give a driver the discomfort feeling can be determined for example by performing an experiment toward a sufficient number of drivers.

A target charging electric power setting unit is not limited provided that it can set the first target charging electric power and the second target charging electric power so as to be able to reduce the vehicle speed at the deceleration start position to the intermediate target vehicle speed, and then reduce the intermediate target vehicle speed to the target vehicle speed. That is, it is only necessary to set the first target charging electric power and the second target charging electric power so as to perform deceleration to different target vehicle speeds such that the deceleration can be executed in a condition where a maximum value of the braking force becomes smaller compared to the abovementioned configuration to reduce the current vehicle speed to the target vehicle speed by generating the regeneration brake that charges the battery with a single level of the target charging electric power. The deceleration start position is only necessary to be a position to start deceleration by the regeneration brake in the vehicle, and may be determined based on a distance to the target position or based on an operation (for example, the operation on a pedal for instructing deceleration start) of the driver in the vehicle. Various types of configurations can be applied.

A deceleration control unit is not limited provided that it can perform deceleration control such that the vehicle speed at the target position becomes the target vehicle speed by generating the regeneration brake that charges the battery with the first target charging electric power after the deceleration start and generating the regeneration brake that charges the battery with the second target charging electric power after the vehicle speed has become the intermediate target vehicle speed. That is, because the first target charging electric power and the second target charging electric power are set for each section such that the vehicle speed at the target position becomes the target vehicle speed, the deceleration control unit controls an electric generator to charge the battery with the first target charging electric power in the early period and the second target charging electric power in the latter period and to generate the regeneration brake.

The regeneration brake is only necessary to be realized by controlling the electric generator installed in the vehicle. That is, the regeneration brake is only necessary to be realized by control to transmit rotation of a wheel to the electric generator and cause the braking force to be operated on the vehicle while charging the battery connected to the electric generator. Within this scope, various methods can be applied for a driving method of the vehicle and a relation between the electric generator and an engine. The present invention may be applied to a hybrid vehicle that is driven by any or both of the engine and the electric generator serving as a motor, or an electric vehicle not provided with an engine.

In addition, the electric power charging the battery may be set based on the performance of the battery. For example, continuous charging electric power with which the battery can be continuously charged without degrading the performance of the battery may be set as the second target charging electric power. That is, the intermediate target vehicle speed is reduced to the target vehicle speed by generating the regeneration brake that charges the battery with the continuous charging electric power. In the configuration to control the electric generator to charge the battery with a predetermined electric power and to generate the regeneration brake, it is possible to define the continuous charging electric power with which the battery can be continuously charged without degrading the performance of the battery. Here, by charging the battery with the continuous charging electric power, it is possible to suppress the degradation of the battery.

Further, the electric power charging the battery may be determined in consideration of factors other than the vehicle speed. For example, the electric power that reduces the intermediate target vehicle speed to the target vehicle speed may be determined such that the braking force operated on the vehicle at the target position becomes less than or equal to a predetermined threshold value, and set as the second target charging electric power. That is, the target position where the vehicle speed becomes the target vehicle speed is an end position of the braking operation where the vehicle speed becomes the lowest through braking by the regeneration brake. The braking force operated on the vehicle at the end position of the braking operation is likely to give the driver the discomfort feeling more than the braking force operated on the vehicle in the course of the braking operation. Therefore, the upper limit of the braking force that is allowed for providing the vehicle that offers a comfortable ride is smaller at the end position of the braking operation than in the course of the braking operation. Thus, the braking operation is configured to be finished in a state where the braking force becomes at the target position less than or equal to the threshold value, which is defined with the upper limit of the braking force that does not give the driver the discomfort feeling when being operated on the vehicle at the end position of the braking operation. According to this configuration, it is possible to provide the vehicle that offers the comfortable ride. The upper limit of the braking force that does not give the driver the discomfort feeling can be determined for example by performing an experiment toward a sufficient number of drivers.

In addition, the electric power that reduces the vehicle speed at the deceleration start position to the intermediate target vehicle speed may be determined such that the braking force when the vehicle speed becomes the intermediate target vehicle speed becomes less than or equal to a predetermined value, and set as the first target charging electric power. According to this configuration, it is possible to suppress the braking force when the vehicle speed becomes the intermediate target vehicle speed to the predetermined value or less, whereby it is possible to provide the vehicle that offers the comfortable ride. Here, the predetermined value is not limited provided that it is the braking force when the vehicle speed becomes the intermediate target vehicle speed and does not give the driver the discomfort feeling. The predetermined value can be determined for example by performing an experiment toward a sufficient number of drivers.

Further, a technique for reducing the vehicle speed to the intermediate target vehicle speed, and then reducing the intermediate target vehicle speed to the target vehicle speed can also be applied in the forms of a program and a method. In addition, the device, the method, and the program described above may be implemented in a stand-alone device, and may be implemented through parts used in common with respective components provided in the vehicle. For example, it is possible to provide a navigation device that is equipped with the device described above, and to provide the method and the program as well. The present invention can also be modified as desired, such as by providing a portion of it in the form of software and a portion of it in the form of hardware, for example. The present invention may also be practiced in the form of a storage medium for a program that controls the device. The software storage medium may be a magnetic storage medium or a magneto optical storage medium. Furthermore, any storage medium that is developed henceforth can also be considered to be exactly the same.

### BRIEF DESCRIPTION OF THE DRAWINGS

FIG. 1 shows a block diagram of a navigation device including a driving support device.

FIG. 2 is a flow chart showing the driving support processing.

FIG. 3A is a view showing a transition of vehicle speed and FIG. 3B is a view showing a transition of charging electric power.

FIG. 4A is a view showing a transition of vehicle speed and FIG. 4B is a view showing a transition of charging electric power.

FIG. 5A is a view showing a transition of vehicle speed and FIG. 5B is a view showing a transition of charging electric power.

FIG. 6A is a view showing a transition of vehicle speed and FIG. 6B is a view showing a transition of charging electric power.

### DETAILED DESCRIPTION

The present invention is described in further detail below with reference to embodiments in the following order.
(1) Structure of navigation device:
(2) Driving support processing:
(3) Other embodiments:

### (1) Structure of navigation device:

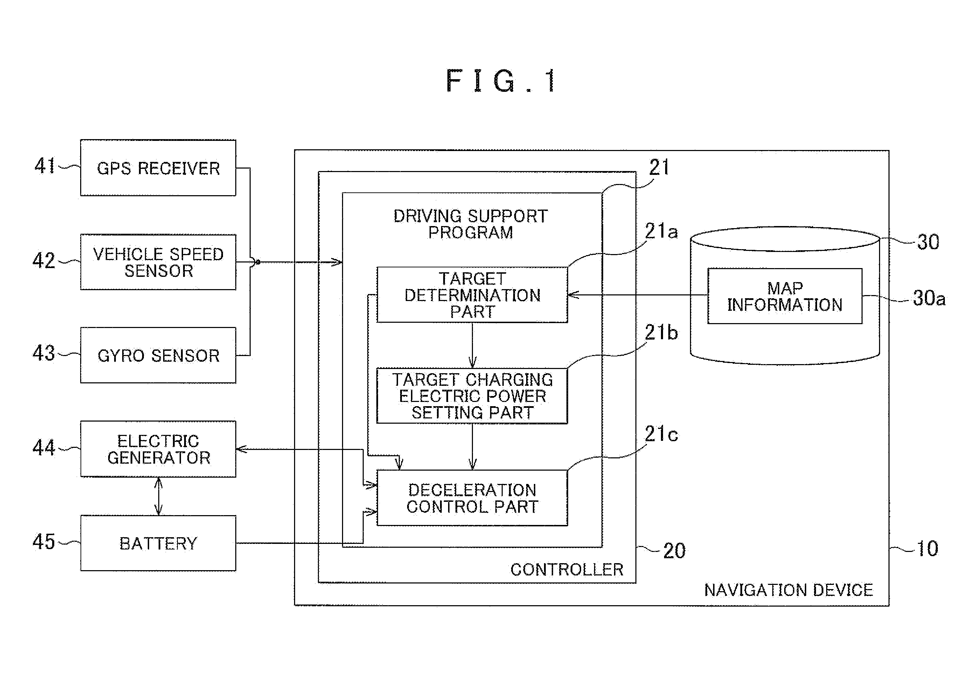

FIG. 1 is a block diagram showing a structure of a navigation device 10 including a driving support device according to the present invention. The navigation device 10 includes a controller 20 and a storage medium 30. The controller 20 includes a CPU, a RAM, a ROM, and the like. Programs stored in the storage medium 30 and the ROM can be executed in the controller 20. In the present embodiment, a driving support program 21 can be executed as such program. The driving support program 21 is executed while the controller 20 is executing navigation processing.

A vehicle in the present embodiment is provided with a GPS receiver 41, a vehicle speed sensor 42, a gyro sensor 43, an electric generator 44, and a battery 45. The controller 20 uses the respective parts as needed to realize functions by the driving support program 21.

The GPS receiver 41 receives radio waves from a GPS satellite and outputs information for calculating a current position of the vehicle via an interface (not shown). The controller 20 acquires the signal to determine the current position of the vehicle. The vehicle speed sensor 42 outputs the signal corresponding to a rotating speed of a wheel provided in the vehicle. The controller 20 acquires the signal via the interface (not shown) to determine a current speed of the vehicle. The gyro sensor 43 outputs the signal corresponding to an angular speed operated on the vehicle. The controller 20 acquires the signal via the interface (not shown) to determine a travel direction of the vehicle. The vehicle speed sensor 42 and the gyro sensor 43 are utilized to adjust the current position of the vehicle determined by the output signal of the GPS receiver 41. In addition, the current position of the vehicle is adjusted based on a travel track of the vehicle as appropriate.

The electric generator 44 is provided with a rotator that is connected to an axle that drives a wheel through a gear (not shown). The electric generator 44 is a device that generates electric power when the rotator of the electric generator 44 rotates according to rotation of the wheel, and charges the battery 45 with the generated electric power. The electric generator 44 is connected to the controller 20 via the interface (not shown). The controller 20 can generate regeneration brake (i.e., perform regenerative braking) and adjust the braking force by controlling a state of electric generation through outputting a control signal to the electric generator 44.

The battery 45 is connected to the electric generator 44, is charged with the electric power generated by the electric generator 44, supplies the charged electric power to the electric generator 44, and causes the electric generator 44 to function as a motor. That is, the electric generator 44 in the present embodiment also includes a function as the motor for driving the vehicle. When the electric generator 44 rotates in receiving the supply of the electric power from the battery 45, the rotation is transmitted to the wheel through the gear (not shown) and the vehicle goes forward or backward. In addition, the vehicle according to the present invention is a hybrid vehicle provided with an engine (not shown), and driven by any one or both of the engine and the electric generator 44 serving as the motor. However, the present invention may be also applied to an electric vehicle without an engine.

In addition, the battery 45 is connected to the controller 20 via the interface (not shown). When the controller 20 outputs the control signal to the battery 45, the signal indicating a state (a temperature and a voltage) of the battery 45 is output from the battery 45. The controller 20 determines the state of the battery 45 based on the signal.

The driving support program 21, in order to realize a function to set first target charging electric power and second target charging electric power and to generate the regeneration brake that charges the battery 45 with the respective target charging electric power during a period to reduce the vehicle speed to a target vehicle speed, includes a target determination part 21a, a target charging electric power setting part 21b, and a deceleration control part 21c. In addition, map information 30a is previously stored in the storage medium 30.

The map information 30a includes node data indicating a node set on a road to be traveled by the vehicle, shape interpolating point data for determining a shape of the road between nodes, link data indicating a connection of nodes, data indicating a feature existing on the road or in the vicinity of the road (a stop line or a white line on the road, a pedestrian crossing, or the like), and the like. In the present embodiment, when it is necessary to stop the vehicle just before the feature, a position to stop the vehicle is defined as a target position, and the data indicating the feature is associated with data indicating the target position. In addition, in the present embodiment, the target vehicle speed is Okm/h because the target position is a position where the vehicle is necessary to stop.

The target determination part 21a is a module that causes the controller 20 to realize a function for determining the target position ahead of the vehicle, the target vehicle speed at the target position, and an intermediate target vehicle speed that is higher than the target vehicle speed. That is, by the processing of the target determination part 21a, the controller 20 determines the current position of the vehicle based on the output signal of the GPS receiver 41, the vehicle speed sensor 42, the gyro sensor 43, and the like, and determines the target position existing within a predetermined area ahead of the current position by referring to the map information 30a. The target vehicle speed is fixed to Okm/h. The intermediate target vehicle speed is a predetermined value Vt (km/h), and is a maximum value in a range of the vehicle speed that is previously determined as the vehicle speed which does not give a driver a discomfort feeling even when the braking force operated on the vehicle has discontinuously changed in traveling at the intermediate target vehicle speed. The intermediate target vehicle speed Vt can be determined in various kinds of methods. For example, the intermediate target vehicle speed Vt can be set to the maximum value or less in the range of the vehicle speed that is determined as the vehicle speed which does not give more than a certain percentage of drivers the discomfort feeling in the experiment to a sufficient number of drivers.

The target charging electric power setting part 21b is a module that causes the controller 20 to realize a function for setting as the first target charging electric power electric power charging a battery to generate regeneration brake that reduces the vehicle speed at a deceleration start position to start deceleration of the vehicle to the intermediate target vehicle speed, and setting as the second target charging electric power electric power charging the battery to generate the regeneration brake that reduces the intermediate target vehicle speed to the target vehicle speed.

Here, the section from the deceleration start position to the position where the vehicle speed becomes the intermediate target vehicle speed Vt is set as a first section, and the electric power charging the battery to reduce the current vehicle speed to the intermediate target vehicle speed by the regeneration brake in the first section is set as the first target charging electric power. The section where the vehicle speed is reduced from the intermediate target vehicle speed Vt to the target vehicle speed is set as a second section, and the electric power charging the battery to reduce the intermediate target vehicle speed to the target vehicle speed by the regeneration brake in the second section is set as the second target charging electric power. The controller 20, by processing of the target charging electric power setting part 21b, sets lengths of the first section and the second section and the first target charging electric power and the second target charging electric power such that the vehicle is decelerated from the current vehicle speed to the intermediate target vehicle speed and then from the intermediate target vehicle speed to the target vehicle speed by the regeneration brake. Here, the controller 20 is configured to set the first target charging electric power for the first section to be larger than the second target charging electric power for the second section.

The deceleration control part 21c is a module that causes the controller 20 to realize a function for decelerating the vehicle such that the vehicle speed at the target position becomes the target vehicle speed, by generating the regeneration brake that charges the battery with the first target charging electric power in the first section and generating the regeneration brake that charges the battery with the second target charging electric power in the second section. As a result of such control, the braking force for reducing the vehicle speed at the deceleration start position to the intermediate target vehicle speed is operated on the vehicle in the first section and the braking force for reducing the intermediate target vehicle speed Vt to the target vehicle speed is operated on the vehicle in the second section, and the vehicle is decelerated such that the vehicle speed at the target position is the target vehicle speed.

Generally, it can be considered that charging electric power of the battery is equal to (or proportional to) a product of the braking force operated on the vehicle and the vehicle speed. Consequently, when braking is performed by generating the regeneration brake that charges the battery with a certain level of the target charging electric power, the braking force increases in inverse proportion to the vehicle speed. As a result, the braking force becomes excessively large in the course of reducing the vehicle speed.

However, in the present embodiment, to reduce the vehicle speed to the target vehicle speed, the section between the deceleration start position of the vehicle and the target position is divided into the first section and the second section, and the first target charging electric power and the second target charging electric power are set such that different levels of target charging electric power are set for the respective sections. Consequently, it becomes possible to collect energy while suppressing excessive increase of the braking force, compared to the abovementioned configuration to generate the regeneration brake that charges the battery with a single level of the target charging electric power.

Further, in the present embodiment, the first target charging electric power and the second target charging electric power are set such that the electric power for the first section, where the vehicle speed is high, is larger than the electric power for the second section. In case of a certain vehicle speed, the larger the target charging electric power is, the larger the braking force can be generated. In addition, when the braking force operated on the vehicle is large, a distance necessary for reducing the vehicle speed becomes short compared to when the braking force is small. Consequently, by setting the first target charging electric power and the second target charging electric power such that the first target charging electric power is larger than the second target charging electric power, it is possible to effectively reduce the vehicle speed in an early stage, without needlessly enlarging a distance necessary for decelerating the vehicle.

In addition, when the vehicle speed is high, energy loss due to air resistance or the like is large compared to when the vehicle speed is low. Therefore, the energy that cannot be collected by the regeneration brake increases as a period of time when the vehicle speed is high increases. However, if the first target charging electric power and the second target charging electric power are set such that the electric power for the first section, where the vehicle speed is high, is larger than the electric power for the second section, the period of time when the vehicle speed is high can be shortened. Therefore, the energy loss due to air resistance or the like can be reduced, thereby being able to increase the energy that can be collected by the regeneration brake.

The electric power charging the battery changes at a position where the section transits from the first section to the second section because the first target charging electric power and the second target charging electric power are different. Along with this change in charging electric power, the braking force operated on the vehicle discontinuously changes at the position where the section transits from the first section to the second section. However, the intermediate target vehicle speed Vt is a maximum value in a range of the vehicle speed that is previously determined as the vehicle speed which does not give a driver the discomfort feeling even when the braking force has discontinuously changed. Consequently, even when a discontinuous change in the braking force has occurred, the change does not give the driver the discomfort feeling. In addition, by setting the intermediate target vehicle speed Vt to the maximum value in the range of the vehicle speed that is previously determined as the vehicle speed which does not give the driver the discomfort feeling, it is possible to set a period, in which continuous charging electric power Pc is the target electric power, to be long.

### (2) Driving support processing:

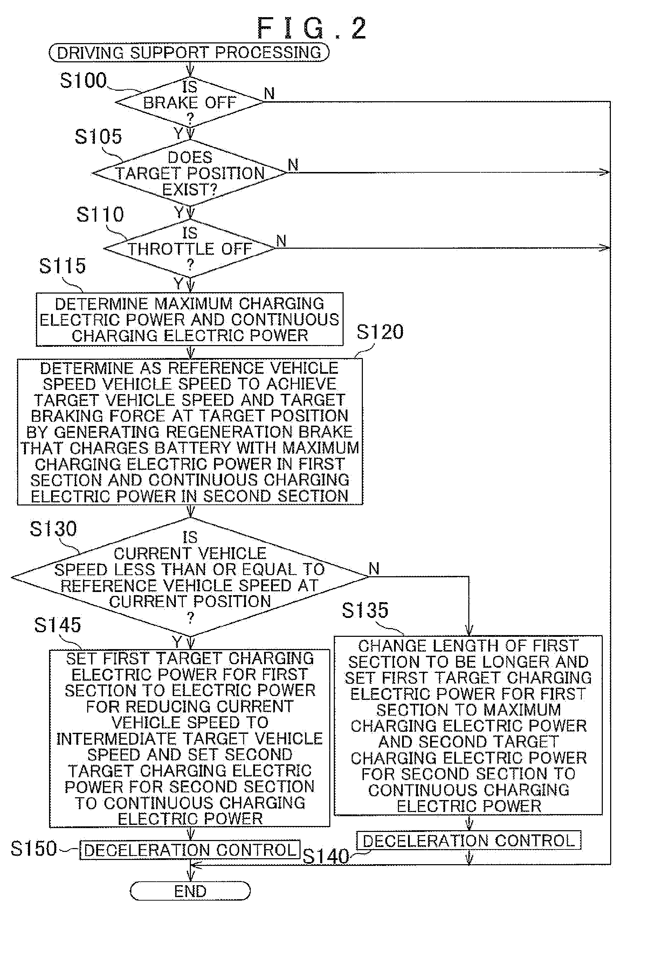

Next, driving support processing in the present embodiment is described in detail. FIG. 2 is a flow chart showing the driving support processing. The driving support processing is executed at predetermined intervals (for example, intervals of 100 ms) while the vehicle is traveling.

In the driving support processing, the controller 20 judges whether or not a brake is off (Step S100). That is, the controller 20 outputs the control signal to a braking part (not shown) to determine an operating volume on a braking force adjustment pedal. If the braking force adjustment pedal is not operated, the controller 20 judges that the brake is off. If it is not judged that the brake is off at Step S100, the processing of Step S105 and subsequent steps are skipped. That is, the driving support by the present invention is not performed.

If it has been judged that the brake is off at Step S100, the controller 20, by the processing of the target determination part 21a, judges whether or not the target position exists within a predetermined area ahead of the vehicle (Step S105). That is, the controller 20 determines the current position of the vehicle based on the output signals of the GPS receiver 41, the vehicle speed sensor 42, the gyro sensor 43, and refers to the map information 30a to extract the data indicating the feature within the predetermined area ahead of the vehicle. If the data indicating the feature is associated with the data indicating the target position, the controller 20 judges that the target position exists within the predetermined area ahead of the vehicle. If it is not judged that the target position exists at Step 105, the processing of Step S110 and subsequent steps are skipped. That is, the driving support by the present invention is not performed.

Next, the controller 20 judges whether or not a throttle is off (Step S110). That is, the controller 20 outputs the control signal to a throttle controller for adjusting opening level of a throttle valve (not shown) to determine the opening level of the throttle valve. If the opening level of the throttle valve is 0, it is judged that the throttle is off. If it is not judged that the throttle is off at Step S110, the processing of Step S115 and subsequent steps is skipped. That is, the driving support by the present invention is not performed.

Next, the controller 20 determines maximum charging electric power and continuous charging electric power to the battery 45 (Step S115). Here, the maximum charging electric power is a maximum value of electric power with which the battery 45 can be charged, and determined according to the performance and the status of the battery 45, and the like. The controller 20 outputs the control signal to the battery 45 to determine the status of the battery 45 and determine the maximum charging electric power. The continuous charging electric power is electric power with which the battery can be continuously charged without degrading the performance of the battery, and a predefined value is determined by the controller 20. The maximum charging electric power is larger than the continuous charging electric power.

Next, the controller 20 determines as a reference vehicle speed the vehicle speed to achieve the target vehicle speed at the target position by generating the regeneration brake that charges the battery 45 with the maximum charging electric power in the first section and with the continuous charging electric power in the second section (Step S120). That is, in the present embodiment, on the assumption that the battery 45 is charged with the maximum charging electric power in the first section and with the continuous charging electric power in the second section, transition of the vehicle speed is determined as the reference vehicle speed. At Step S135 or S145 described later, by comparing between the reference vehicle speed and the current vehicle speed, the lengths of the first section and the second section and the first target charging electric power are adjusted.

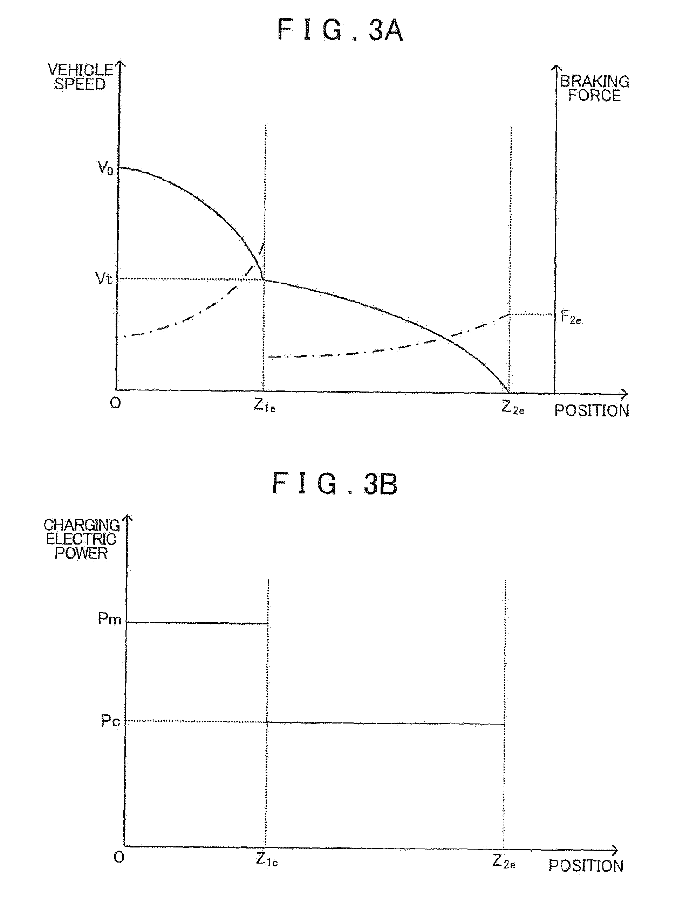

FIG. 3A is an exemplary view of determination of the reference vehicle speed. In FIG. 3A, a horizontal axis indicates the position, and a vertical axis indicates the vehicle speed and the braking force. A solid line indicates the reference speed and a dashed-dotted line indicates the braking force. In the present example, an original point O is the current position of the vehicle, the section from the original point 0 to a position Z₁ₑ is the first section, and the section from the position Z₁ₑ to a position Z₂ₑ is the second section. In FIG. 3B, while the horizontal axis indicates the same as FIG. 3A, the vertical axis indicates the charging electric power. Pm(W) denotes the maximum charging electric power and Pc(W) denotes the continuous charging electric power.

The reference vehicle speed and the braking force as shown in FIG. 3A are determined by repeating the processing for determining the reference vehicle speed at every unit of time and the transition of acceleration according to a condition to charge the battery 45 with the charging electric power for the respective sections. First, the controller 20 determines the braking force at the target position based on the continuous charging electric power Pc. In the present embodiment, it is considered that the continuous charging electric power Pc that is the charging electric power for the battery is equal to the product of the braking force operated on the vehicle and the vehicle speed. However, in order to avoid directly utilizing Okm/h as the target vehicle speed, the vehicle speed at the target position is set to a predetermined vehicle speed V₂ₑ (for example, 1km/h) that is quite close to 0. A braking force F₂ₑ at the target position Z₂ₑ is determined by dividing the continuous charging electric power Pc by the predetermined vehicle speed V₂ₑ. As a result, the braking force at the target position Z₂ₑ is set to F₂ₑ, and the reference vehicle speed is set to the predetermined vehicle speed V₂ₑ. Here, the braking force is defined under the condition that a direction ahead of the vehicle is positive. Therefore, the braking force F₂ₑ is a negative number.

Next, the controller 20 determines the reference speed at a unit of time before that is required for achieving the above reference vehicle speed and braking force at the target position Z₂e. That is, as a value acquired by dividing the braking force F₂ₑ at the target position by a weight of the vehicle is an acceleration to be operated on the vehicle (a negative acceleration under the condition that a direction ahead of the vehicle is positive), the reference vehicle at the unit of time before is determined by adding the product of the acceleration and a negative unit of time, which indicates going back into the past, into the predetermined vehicle speed V₂ₑ that corresponds to the target vehicle speed. In addition, the position backward in relation to the travel direction by a distance acquired by multiplying the reference vehicle speed by the unit of time is defined as the position of the vehicle at the unit of time before.

As described above, when it is considered that the product of the braking force operated on the vehicle and the vehicle speed is equal to the continuous charging electric power, the braking force operated on the vehicle is defined with a value acquired by dividing the continuous charging electric power by the vehicle speed. Therefore, as described above, after calculating the reference vehicle speed at the unit of time before, the braking force at the unit of time before can be determined by dividing the continuous charging electric power by the reference vehicle speed. By repeating this processing, the reference vehicle speed and the braking force at each position can be determined.

For example, in order to realize that the target vehicle speed and the braking force at the target position Z₂ₑ become V₂ₑ and F₂ₑ respectively when the electric generator 44 charges the battery 45 with the continuous charging electric power Pc, the controller 20 calculates a reference vehicle speed V₂₁ at the unit of time before as V₂ₑ + (-T) x (F₂ₑ /M) (km/h). Here, T represents a length of the unit of time. In addition, the controller 20 determines the position of the vehicle at the unit of time before as a position Z₂₁ (not shown) that is the position backward in relation to the travel direction by a distance V₂₁ x T (m) from the target position Z₂ₑ. As a result, the reference vehicle speed at the position Z₂₁ is determined as V₂₁. The controller 20 determines a braking force F₂₁ at the position Z₂₁ as (-Pc/V₂₁) (N).

Further, the controller 20 defines an acceleration a₂₁ that is operated on the vehicle at the position Z₂₁ as (-Pc/(V₂₁ •M)) (m/s²) and determines a reference vehicle speed V₂₂ of the vehicle at the unit of time before from the status at the position Z₂₁ as V₂₁ + (-T) x (-Pc/(V₂₁ M)). Further, the controller 20 determines the position of the vehicle at the unit of time before as a position Z₂₂ that is the position backward in relation to the travel direction by a distance V₂₂ x T from the position Z₂₁. The controller 20 repeats the above processing until the reference vehicle speed becomes the intermediate target vehicle speed Vt (km/h) and determines the position where the reference vehicle speed becomes the intermediate target vehicle speed Vt as the position Z_{1e.}

Next, the controller 20 determines the transition of the reference vehicle speed and the braking force when going back into the past from the position Z₁ₑ in the state that the electric generator 44 charges the battery 45 with the maximum charging electric power Pm. That is, the controller 20 calculates a reference vehicle speed V₁₁ at the unit of time before from the position Z₁ₑ serving as a reference point as Vt + (-T) x (F₁ₑ/M) (km/h). Here, F₁ₑ is the braking force at the position Z₁ₑ that was determined by dividing the maximum charging electric power Pm by the intermediate target vehicle speed Vt. In addition, the controller 20 determines the position of the vehicle at the unit of time before from the position Z₁ₑ serving as the reference point as a position Z₁₁ (not shown) that is the position backward in relation to the travel direction by a distance V₁₁ x T (m) from the position Z₁ₑ. As a result, the reference vehicle speed at the position Z₁₁ is determined as V_{11,} and the controller 20 determines a braking force F₁₁ at the position Z₁₁ as (-Pm/V₁₁) (N).

Further, the controller 20 defines an acceleration a₁₁ that is operated on the vehicle at the position Z₁₁ as (-Pm/(V₁₁• M)) and determines a reference vehicle speed V₁₂ of the vehicle at the unit of time before from the status at the position Z₁₁ as V₁₁ + (-T) x (- Pm/(V₁₁• M)). Further, the controller 20 determines the position of the vehicle at the unit of time before as a position Z₁₂ that is the position backward in relation to the travel direction by a distance V₁₂ x T from the position Z₁₁. The controller 20 repeats the above processing until the position matches with or becomes behind the current position. In FIG. 3A, the reference vehicle speed at the current position (or a position closest to the current position) is indicated as Vo.

As described above, when the reference vehicle speed is determined at Step S120, the controller 20 judges whether or not the current vehicle speed is less than or equal to the reference vehicle speed at the current position (Step S130). If it is not judged that the current vehicle speed is less than or equal to the reference vehicle speed at the current position at Step S130, the controller 20 changes the length of the first section to be longer and sets the first target charging electric power for the first section to the maximum charging electric power and the second target charging electric power for the second section to the continuous charging electric power (Step S135). That is, if it is not judged that the current vehicle speed is less than or equal to the reference vehicle speed at the current position, it is not possible to reduce the vehicle speed to the target vehicle speed at the target position when setting the target charging electric power for the first section to the maximum charging electric power and the target charging electric power for the second section to the continuous charging electric power as determined at Step S120, and generating the regeneration brake.

In the present embodiment, by extending the length of the first section where the battery is charged with the maximum charging electric power, the vehicle speed is reduced to the target vehicle speed at the target position. Specifically, the controller 20 determines the transition of the vehicle speed when the vehicle traveling at the current vehicle speed at the current position is decelerated by generating the regeneration brake that charges the battery 45 with the maximum charging electric power, and defines the position where the vehicle speed matches with or becomes less than the reference vehicle speed as an end position of the first section Z₁ₑ.

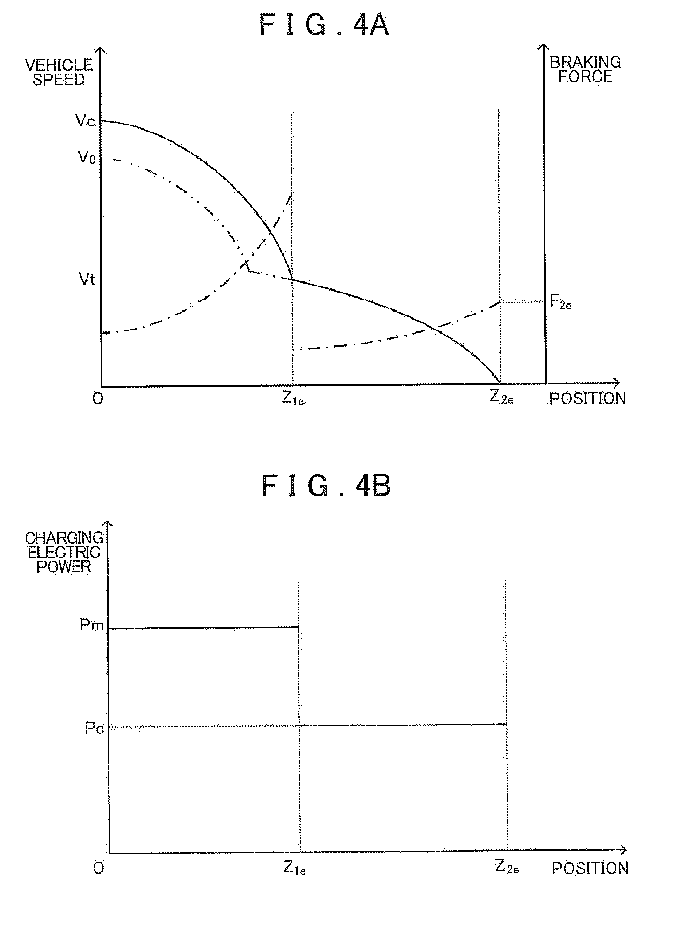

FIG. 4A is a view explaining a determination procedure of the length of the first section when a relation between the current position and the target position is the same as that in FIG. 3A. As shown in FIG. 4A, the current vehicle speed at the current position is Vc. When generating the regeneration brake that charges the battery 45 with the maximum charging electric power Pm after the current position, the braking force at the current position is (-Pm/Vc). The controller 20 considers that an acceleration a_{c} operated on the vehicle in this status is (-Pm/ (Vc• M)) (N). Further, the controller 20 considers that the position of the vehicle in the unit of time is a position Z₀₁ (not shown) that is located by (Vc x T) (m) ahead of the current position, and the vehicle speed Vc1 at the position Z₀₁ is (Vc + ((-Pm/ (V_{C}• M)) x T)) (km/h). According to such processing, the braking force at the position Z₀₁ that is located by (Vc x T) (m) ahead of the current position can be determined as (-Pm/Vc₁) and an acceleration a_{c1} can be determined as (-Pm/ (Vc₁• M)). The controller 20 repeats the above processing until the vehicle speed matches with the reference vehicle speed of the second section that is shown in FIG. 3A (or the vehicle speed becomes less than or equal to the reference vehicle speed of the second section).

In FIG. 4A, the position where the vehicle speed matches with the reference vehicle speed of the second section when the vehicle speed is reduced by generating the regeneration brake that charges the battery 45 with the maximum charging electric power Pm from the current position, is defined as the end position of the first section, which is indicated as Z₁ₑ. In addition, in FIG. 4A, the reference vehicle speed behind the position Z₁ₑ is indicated with a dashed-two dotted line, the reference vehicle speed ahead of the position Z₁ₑ is indicated with a solid line, and the braking force is indicated with a dashed-dotted line. As described above, at Step S135, the controller 20 determines the lengths of the first section and the second section by changing the length of the first section that was determined at Step S120 and shortening the length of the second section at the same time. As shown in FIG. 4B, the first target charging electric power is set to the maximum charging electric power Pm and the second target charging electric power is set to the continuous charging electric power Pc.

The controller 20, by the processing of the deceleration control part 21c, performs deceleration control by outputting the control signal that controls the electric generator 44 so as to charge the battery 45 with the maximum charging electric power as the first target charging electric power in the course of traveling the first section and outputting the control signal that controls the electric generator 44 so as to charge the battery 45 with the continuous charging electric power as the second target charging electric power in the course of traveling the second section (Step S140). As a result, it is possible to perform control such that the vehicle speed becomes the target vehicle speed at the target position by decelerating the vehicle, as shown by the solid line in FIG. 4A, in the course of the vehicle traveling from the current position to the target position. As described above, according to the processing indicated at Steps S135 and S140, the current position of the vehicle when it has been judged that the throttle is off at Step S110 is defined as the deceleration start position. Further, the deceleration control is performed in a state in which the section between the deceleration start position and the target position is divided into the first section and the second section and the first target charging electric power and the second target charging electric power are set to different levels. Consequently, it is possible to collect energy while suppressing excessive increase of the braking force, compared to the configuration to reduce the vehicle speed to the target vehicle speed by generating the regeneration brake that charges the battery with a single level of the target charging electric power.

On the other hand, if it has been judged that the current vehicle speed is less than or equal to the reference vehicle speed at the current position at Step S130, the controller 20 sets the first target charging electric power to the electric power for reducing the current vehicle speed to the intermediate target vehicle speed, and sets the second target charging electric power to the continuous charging electric power (Step S145). That is, if it has been judged that the current vehicle speed is less than or equal to the reference vehicle speed of the current position, it is possible to reduce the vehicle speed to the target vehicle speed at the target position by setting the target charging electric power for the first section that was determined at Step S120 to the maximum charging electric power or less and generating the regeneration brake.

In the present embodiment, the first target charging electric power is set to the maximum charging electric power or less. Specifically, the controller 20 determines the electric power for reducing the current vehicle speed to the intermediate target vehicle speed Vt in the first section. To determine the electric power, a predefined map is referred in the present embodiment. That is, in the present embodiment, the charging electric power required for reducing the current vehicle speed to the specific intermediate target vehicle speed Vt is previously determined for each distance between the current position and the end position of the first section and each value of the current vehicle speed Vd and defined as a map.

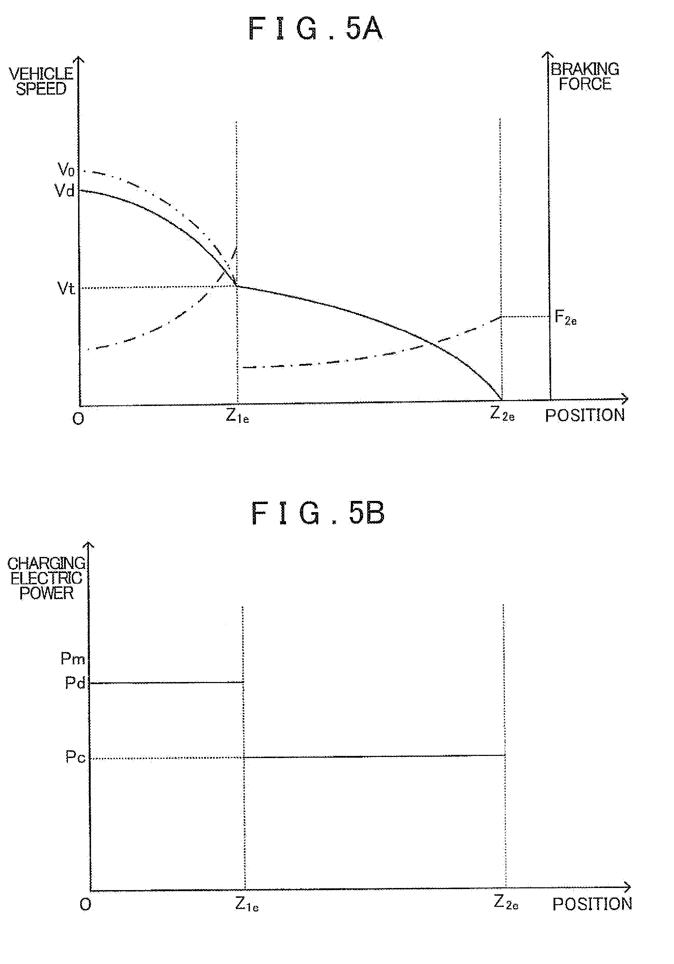

FIG. 5A is a view explaining a determination procedure of the first target charging electric power when the relation between the current position and the target position is the same as that in FIG. 3A. FIG. 5B is a view explaining the first and the second target charging electric power corresponding to FIG. 5A. At Step S145, the controller 20 determines the distance between the current position and the end position Z₁ₑ of the first section that was determined at Step S120, determines the current vehicle speed Vd, and refers to the map to determine a charging electric power Pd corresponding to the distance and the current vehicle speed Vd. Then, the controller 20 sets the determined charging electric power Pd as the first target charging electric power for the first section. In addition, the controller 20 sets the deceleration start position to the current position and sets the target charging electric power for the second section to the continuous charging electric power Pc.

Next, the controller 20, by the processing of the deceleration control part 21c, performs deceleration control by outputting the control signal to control the electric generator 44 so as to charge the battery 45 with the electric power Pd in the course of traveling the first section after the deceleration start position, and outputting the control signal to control the electric generator 44 so as to charge the battery 45 with the continuous charging electric power Pc in the course of traveling the second section (Step S150). As a result, it is possible to perform control such that the vehicle speed becomes the target vehicle speed at the target position by decelerating the vehicle, as shown by the solid line in FIG. 5A, in the course of the vehicle traveling from the current position to the target position. As described above, according to the processing indicated at Steps S145 and S150, the first target charging electric power is set such that the vehicle speed at the deceleration start position is reduced to the intermediate target vehicle speed in the first section and the second target charging electric power is set such that the intermediate target vehicle speed is reduced to the target vehicle speed in the second section. Consequently, it is possible to collect the energy while suppressing excessive increase of the braking force, compared to the configuration to reduce the vehicle speed to the target vehicle speed by generating the regeneration brake that charges the battery with a single level of the target charging electric power.

### (3) Other embodiments:

The above-mentioned embodiment is an example to realize the present invention. Other embodiments can be also applied provided that the vehicle speed is reduced to the intermediate target vehicle speed first and then the intermediate target vehicle speed is reduced to the target vehicle speed. For example, the target vehicle speed is not limited to 0 km/h, but may be larger than 0 km/h. In addition, the target position is not limited provided that it is the position on the road where the vehicle speed should be the target vehicle speed or less. The target position may be a start position of a low-traffic section where the vehicle should travel at a certain vehicle speed or less. Various configurations can be applied. Further, the target position may be dynamically changed. For example, the target vehicle speed may be determined according to a signal indicated by a traffic light and a stop line corresponding to the traffic light may be set as the target position if the vehicle should be stopped.

Further, the lengths of the first section and the second section are only necessary to be determined according to the distance between the deceleration start position and the target position. The present invention also can be realized by various kinds of configurations other than the above configuration. For example, if the distance between the deceleration start position and the target position is shorter than the distance required for reducing the vehicle speed to the target vehicle speed only with the braking force by the regeneration brake that charges the battery with the continuous charging electric power, the length of the first section may be defined with a minimum length required for performing the braking by the regeneration brake that charges the battery with the maximum charging electric power and the rest may be defined as the second section. In addition, if the battery can be cooled in the course of charging the battery with the continuous charging electric power, the length of the second section may be set such that temperature increased by charging the battery with the maximum charging electric power can be lowered in the course of charging the battery with the continuous charging electric power.

Further, the second target charging electric power for the second section may be set to the charging electric power with which the braking force to be operated on the vehicle at the target position becomes the upper limit of the braking force that does not give the driver the discomfort feeling when the braking force to be operated on the vehicle at the target position is operated on the vehicle at an end position of the braking operation. That is, the target position where the vehicle speed becomes the target vehicle speed is the end position of the braking operation where the vehicle speed becomes the lowest due to the braking by the regeneration brake. The braking force operated on the vehicle at the end position of the braking operation gives the driver the discomfort feeling more than the braking force operated on the vehicle in the course of the braking operation. Therefore, the upper limit of the braking force that is allowed for providing the vehicle that offers a comfortable ride is smaller at the end position of the braking operation compared to in the course of the braking operation. Thus, the braking operation is configured to be finished in a state where the braking force at the target position becomes the target braking force, which is defined with the upper limit of the braking force that does not give the driver the discomfort feeling when being operated on the vehicle at the end position of the braking operation.

Such configuration may be applied by for example setting the target braking force Ft at the target position to an upper limit of the braking force that does not give the driver the discomfort feeling and the vehicle speed at the target position to a predetermined vehicle speed V₂ₑ (for example, 1km/h) that is quite close to 0, and determining the second target charging electric power for the second section by the product of Ft and V₂ₑ. According to this configuration, it is possible to provide the vehicle that offers the comfortable ride. In addition, the target braking force Ft may be smaller than the upper limit of the braking force that does not give the driver the discomfort feeling. Further, the upper limit can be determined for example by performing an experiment toward a sufficient number of drivers.

Further, in the above embodiment, the braking force at a border between the first section and the second section changes in a discontinuous manner. Therefore, the braking force to be operated on the vehicle at the end position of the first section may be set to a predetermined value Fmax (N) in order not to give the driver the discomfort feeling due to the occurrence of the discontinuous change. This configuration can be realized for example by performing the following processing instead of Steps S120 to S150.

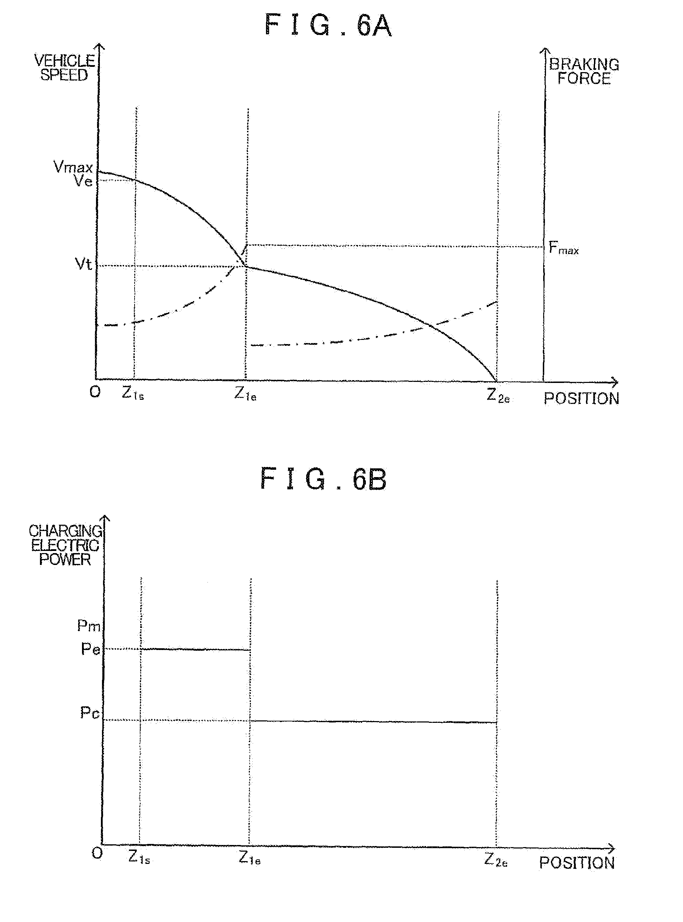

In this processing, the controller 20 firstly acquires the predetermined value Fmax, determines the position Z₁ₑ by the same processing as Step S120, and defines Fmax as the braking force at the position Z₁ₑ. In the present example, the target charging electric power for the second section is described with the continuous charging electric power Pc. However, the target charging electric power for the second section may be a predetermined value, or the charging electric power that is set based on the target braking force Ft at the target position. The vehicle speed calculated as the vehicle speed corresponding to the position Z₁ₑ is the intermediate target vehicle speed Vt. Therefore, the controller 20 determines a charging electric power Pe at the position Z₁ₑ as (an absolute value of Vt x Fmax) (W). In the present embodiment, the charging electric power Pe is the electric power for reducing the current vehicle speed to the intermediate target vehicle speed Vt, and set as the first target charging electric power for the first section as shown in FIG. 6B.

Next, the controller 20 considers an acceleration ae operated on the vehicle at the position Z₁ₑ as Fmax/M (N). Further, the controller 20 calculates the vehicle speed Vₑ₁ at the unit of time before from the position Z₁ₑ in a state of charging the battery with the first target charging electric power Pe as Vt + (-T) x (Fmax/M) (km/h). In addition, the controller 20 determines the position of the vehicle at the unit of time before from the position Z₁ₑ serving as a reference position as a position Zₑ₁ that is the position backward in relation to the travel direction by a distance Vₑ₁ x T (m) from the position Z₁ₑ (not shown). As a result, the vehicle speed at the position Zₑ₁ is determined as Vₑ₁, and the controller 20 determines the braking force Fₑ₁ at the position Z₁ₑ as (-Pe/Ve₁) (N).

Further, the controller 20 considers an acceleration ae₁ to be operated on the vehicle at the position Ze₁ as (-Pe/(Ve₁. M)), and determines a vehicle speed Ve₂ at the unit of time before from the status at the position Zₑ₁ as Ve₁ + (-T) x (-Pe/(Ve₁ M). In addition, the controller 20 determines the position of the vehicle at the unit of time before as a position Zₑ₂ that is the position backward in relation to the travel direction by a distance Vₑ₂ x T from the position Ze₁. The controller 20 repeats the above processing until the position calculated as the position of the vehicle at the unit of time before matches with or becomes behind the original point O as the current position of the vehicle. In FIG. 6A, the position where the vehicle speed calculated by the above processing matches with the current vehicle speed Ve (or becomes equal to or more than the current vehicle speed Ve) is indicated with Z₁ₛ, and the vehicle speed when the position of the vehicle at the unit of time before matches with the original point O that is the current position of the vehicle (or becomes behind the original point O that is the current position of the vehicle) is indicated with Vmax.

In addition, in FIG. 6A, the vehicle speed calculated by the above processing (Ve₂ and the like) and the vehicle speed determined by the same processing as Step S120 for the section ahead of the position Z₁ₑ is indicated with a solid line, and the braking force is indicated with a dashed-dotted line. As indicated above, when the vehicle speed Vmax and the position Z₁ₛ are determined, the controller 20 judges whether or not to perform the deceleration control. That is, if the current vehicle speed Ve at the current position of the vehicle is equal to or more than Vmax, it is not possible to set the position Z₁ₛ at a position ahead of the current position. Therefore, the controller 20 does not perform the deceleration control. On the other hand, if the vehicle speed Ve is smaller than Vmax, the controller 20 sets the position Z₁ₛ that is the position where the vehicle speed calculated as described above matches with the current vehicle speed Ve as the start position of the first section, that is, the deceleration start position, and sets the first target charging electric power to Pe. In addition, the controller 20 sets the second target charging electric power to the continuous charging electric power Pc.

The controller 20, by the processing of the deceleration control part 21c, performs the deceleration control by maintaining the vehicle speed in the course of traveling to the deceleration start position, outputting the control signal that controls the electric generator 44 so as to charge the battery 45 with the electric power Pe in the course of traveling the first section after the deceleration start position, and outputting the control signal that controls the electric generator 44 so as to charge the battery 45 with the continuous charging electric power Pc in the course of traveling the second section.

In the above processing, the first target charging electric power is set such that the braking force when the vehicle speed becomes the intermediate target vehicle speed Vt matches with the predetermined value Fmax. Consequently, according to this configuration, it is possible to suppress the braking force when the vehicle speed becomes the intermediate target vehicle speed to the predetermined value Fmax or less, whereby it is possible to provide the vehicle that offers the comfortable ride. Here, the predetermined value Fmax is not limited provided that it is the braking force when the vehicle speed becomes the intermediate target vehicle speed and does not give the driver the discomfort feeling. The predetermined value Fmax can be determined for example by performing an experiment toward a sufficient number of drivers. The braking force when the vehicle speed becomes the intermediate target vehicle speed Vt is only necessary to be less than or equal to the predetermined value Fmax. The first target charging electric power may be set such that the braking force when the vehicle speed becomes the intermediate target vehicle speed Vt becomes less than or equal to the predetermined value Fmax.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving support device comprising:
a target determination unit (20) adapted to determine a target position ahead of a vehicle, a target vehicle speed at the target position, and an intermediate target vehicle speed (Vt) that is higher than the target vehicle speed;
a target charging electric power setting unit (20) adapted to set first target charging electric power charging a battery (45) to generate a regeneration brake that reduces a vehicle speed at a deceleration start position to start deceleration of the vehicle to the intermediate target vehicle speed, and set second target charging electric power charging the battery to generate the regeneration brake that reduces the intermediate target vehicle speed to the target vehicle speed; and
a deceleration control unit (20) adapted to control an electric generator (44) installed in the vehicle to charge the battery with the first target charging electric power and to generate the regeneration brake, and, after the vehicle speed of the vehicle has become the intermediate target vehicle speed, control the electric generator to charge the battery with the second target charging electric power and to generate the regeneration brake.

2. The driving support device according to claim 1, wherein
the target charging electric power setting unit (20) is adapted to set the second target charging electric power to continuous charging electric power with which the battery can be continuously charged without the performance being degraded.

3. The driving support device according to claim 1, wherein
the target charging electric power setting unit (20) is adapted to determine the second target charging electric power such that braking force to be operated on the vehicle at the target position becomes less than or equal to a predetermined threshold value.

4. A driving support method comprising the steps of:
determining (S105) a target position ahead of a vehicle, a target vehicle speed at the target position, and an intermediate target vehicle speed (Vt) that is higher than the target vehicle speed;
setting (S145, S135) first target charging electric power charging a battery to generate a regeneration brake that reduces a vehicle speed at a deceleration start position to start deceleration of the vehicle to the intermediate target vehicle speed, and setting second target charging electric power charging the battery to generate the regeneration brake that reduces the intermediate target vehicle speed to the target vehicle speed; and
controlling (S150, S140) an electric generator installed in the vehicle to charge the battery with the first target charging electric power and to generate the regeneration brake, and, after the vehicle speed of the vehicle has become the intermediate target vehicle speed, controlling the electric generator to charge the battery with the second target charging electric power and to generate the regeneration brake.

5. The driving support method according to claim 4, further comprising the step of setting the second target charging electric power to continuous charging electric power with which the battery can be continuously charged without the performance being degraded.

6. The driving support method according to claim 4, further comprising the step of determining the second target charging electric power such that braking force to be operated on the vehicle at the target position becomes less than or equal to a predetermined threshold value.

7. A driving support program comprising computer-executable instructions that, when run on a computer, cause the computer to execute the steps of the method according to any one of claims 4 to 6.

8. A storage medium comprising the driving support program according to claim 7.
